## Europäisches Patentamt
## European Patent Office
## Office européen des brevets

(19)

(11) Veröffentlichungsnummer: **0 029 910**
**B1**

(12) **EUROPÄISCHE PATENTSCHRIFT**

(45) Veröffentlichungstag der Patentschrift:
**02.06.82**

(51) Int. Cl.³: **C 09 J 5/06,** C 09 J 5/08

(21) Anmeldenummer: **80106429.6**

(22) Anmeldetag: **22.10.80**

(54) Verfahren zum Verkleben von Gegenständen mittels eines heißhärtbaren Klebers.

(30) Priorität: **01.12.79 DE 2948405**

(43) Veröffentlichungstag der Anmeldung:
**10.06.81 Patentblatt 81/23**

(45) Bekanntmachung des Hinweises auf die Patenterteilung:
**02.06.82 Patentblatt 82/22**

(84) Benannte Vertragsstaaten:
**FR GB NL SE**

(56) Entgegenhaltungen:
**DE-A-2 014 239**
**GB-A-1 511 242**
**NL-A-7 414 365**

(73) Patentinhaber: **Messerschmitt-Bölkow-Blohm Gesellschaft mit beschränkter Haftung, Postfach 801109, D-8000 München 80 (DE)**

(72) Erfinder: **Franz, Dieter, Ing. grad., Grafengars 46, D-8261 Jettenbach (DE)**
Erfinder: **Brand, Konrad, Ing. grad., Mesnerstrasse 3, D-8011 Höhenkirchen (DE)**

BUNDESDRUCKEREI BERLIN

Verfahren zum Verkleben von Gegenständen mittels eines heißhärtbaren Klebstoffs

Die Erfindung betrifft ein Klebeverfahren gemäß dem Oberbegriff des Patentanspruchs 1.

Bei der Herstellung von Bauteilen in Sandwichbauweise mit einem Stützkern aus porösem oder zellförmig aufgebautem Material, beispielsweise einem Wabenkern, ist es schon üblich, zur Erhöhung der Haftfestigkeit seiner Deckschichten als Verbindungsmittel einen Klebstoff zu verwenden, der an der jeweiligen Deckschicht aufgetragen unter Zufuhr von Wärme aufschäumt bzw. sich ausdehnt und infolgedessen beim anschließenden Aushärten die Deckschicht an der betreffenden (mit Klebstoff ausgeschäumten) Wurzel des Stützkerns fest verankert. Jedoch sind die Möglichkeiten solcher Verwendung dieses als Spleißkleber bezeichneten Klebstoffes von der Zugänglichkeit der Verbindungs- bzw. Klebefugen für die von außen zuzuführende Wärme abhängig. So kommt bisher eine Verwendung von Spleißkleber zwischen besonders ausgedehnten (großflächigen) Verbindungsflächen von stumpf gegeneinanderstoßenden Gegenständen nicht in Betracht, beispielsweise nicht für das Verbinden von Stützkernabschnitten zur Herstellung eines großflächigen Rotorblattes einer Großwindenergieanlage. Denn sofern überhaupt die dem Inneren der jeweiligen Klebefuge zuführbare Wärme ein Aufschäumen bzw. Ausdehnen eines Klebstoffs bewirken könnte, ließen sich bei einer entsprechend ausreichend intensiven Außenbeheizung der zu verklebenden Stützkernabschnitte in deren Randzonen Wärmeschäden kaum ausschließen. Zudem wäre das Verfahren schon wegen relativ langer Aufwärmzeiten unwirtschaftlich. Dem ließe sich zwar durch ein Verfahren gemäß der GB-A-1 511 242 beikommen, bei dem ein herkömmlicher Kompaktklebstoff in der Klebefuge durch ein eingebettetes, elektrisch leitendes Substrat, bevorzugt eine Metallfolie, infolge Stromdurchflusses erwärmt wird. Ein demgegenüber vorgenommener Austausch des Kompaktklebstoffes durch den Spleißkleber würde aber auf jeden Fall zu einer Festigkeitsminderung des fertigen Körpers an der Klebefuge führen, weil naturgemäß der mit Luft (oder Gas) gestreckte Schaumklebstoff »Spleißkleber« in seinen mechanischen Eigenschaften schwächer als Kompaktklebstoff ist.

Der Erfindung liegt daher die Aufgabe zugrunde, durch ein Verfahren der eingangs genannten Art Gegenstände mit ausgedehnten Verbindungsflächen zu einem Körper mit großflächigen Verbindungs- bzw. Klebefugen nicht nur ohne Wärmeschäden, sondern auch ohne Schwächung an den Klebefugen zu vereinigen, wobei sowohl Einzelteile aus porösem oder zellförmig aufgebautem Material in Betracht kommen sollen als auch solche Einzelteile, bei deren Zusammenfügung Unebenheiten oder Rauhigkeiten ihrer Verbindungsflächen zu Dikkenunterschieden der Klebstoffschicht führen.

Diese Aufgabe ist gemäß dem Kennzeichen des Patentanspruchs 1 gelöst. Hiernach gestattet in der jeweiligen Klebefuge ein als elektrischer Heizleiter dienender Faserstoff nicht nur ein internes Beheizen des verwendeten Spleißklebers, sondern fungiert nach dessen Aushärten auch noch als eine verstärkende Zwischenlage in der Klebefuge der betreffenden Gegenstände, kompensiert also den unerwünschten Schwächungseffekt des Spleißklebers.

Soweit bei dem Verfahren gemäß der Erfindung die Druckkräfte infolge des Expansionsdruckes des Spleißklebers je Klebefuge begrenzt werden sollen, braucht jener bloß in der im Unteranspruch gekennzeichneten Weise partiell zum Aufschäumen bzw. Ausdehnen gebracht zu werden, d. h. die Klebefuge wird nicht gleichzeitig über ihre gesamte Länge, sondern nur abschnittsweise erwärmt. Hierdurch wird die Druckfläche (damit die Druckkräfte) entscheidend verringert, was beispielsweise die Herstellung der vorgenannten großflächigen Rotorblätter bei tragbarem Vorrichtungsaufwand überhaupt erst ermöglicht.

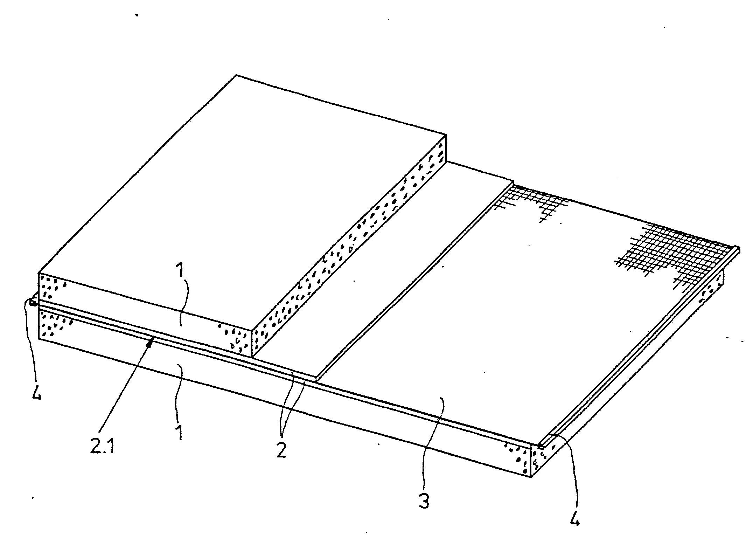

Weitere bemerkenswerte Einzelheiten werden im nachfolgenden Ausführungsbeispiel der Erfindung verdeutlicht. Hierzu zeigt die Zeichnung perspektivisch und teilweise aufgeschnitten nur einen Ausschnitt von einem Stützkern aus Schaumkunststoff, beispielsweise eines Rotorblattes. Der Stützkern ist aus einer Vielzahl von Einzelteilen 1 zusammengesetzt, deren Verbindung durch eine Klebmasse 2 in der jeweiligen Klebefuge 2.1 sichergestellt ist. Die zur besseren Verdeutlichung besonders dick dargestellte Klebmasse 2 beruht auf einem unter Wärme aufschäumenden bzw. sich ausdehnenden und dann aushärtenden Spleißkleber, beispielsweise Kleber FM40 der Firma American Cyanamid Company Bloomingtail Dep., Maryland, USA. Im angeführten Anwendungsbeispiel, nämlich einer großflächigen Klebefuge 2.1, wird die für das Ausdehnen und Aushärten nötige Wärme in der Klebefuge als Widerstandswärme eines stromdurchflossenen Kohlefasergewebes 3 erzeugt, das im Spleißkleber bzw. zwischen zwei Lagen desselben eingebettet ist; als Kohlefasergewebe kommt beispielsweise G801 der Firma Brochier, Lyon, Frankreich in Betracht. Hierbei kann die Stromzuführung, z. B. aus einer Niederspannungsstromquelle (wie Schweißtransformator), über zwei Kupferstreifen 4 erfolgen, in denen je ein Ende des nur zu diesem Zweck aus der Klebefuge 2.1 beidseitig herausragenden Kohlefasergewebes 3 eingefalzt ist; hieran können die Zuleitungen der Stromquelle in üblicher Weise angeschlossen, z. B. angeklemmt werden. Weitere Einzelheiten der Verwendung von Kohlefasergewebe als Mittel der elektrischen Widerstandswärmeerzeugung sind der nicht vorveröffentlichten DE-A-2 928 293 entnehmbar.

Aufgrund der über das Kohlefasergewebe 3 in der Klebefuge 2.1 erzeugten Wärme mit der Folge einer Expansion des Spleißklebers kommt es zu einer in die Schaumkunststoffporen des Stützkerns bzw. seiner Einzelteile 1 eingepreßten Klebmasse 2, welche nach dem Aushärten eine gegenseitige feste Verankerung der Einzelteile 1 sicherstellt. Das Kohlefasergewebe 3 erfüllt dann hierbei zugleich die Funktion einer Klebestellen-Verstärkung, durch welche sich im übrigen Fertigungstoleranzen der Einzelteile 1 bzw. Spaltweitentoleranzen der Klebefuge 2.1 ausgleichen lassen; unter diesem Kriterium ist das Verfahren gemäß der Erfindung natürlich auch für das Verkleben von Einzelteilen mit geringfügig unebenen oder rauhen Verbindungsflächen von Vorteil.

Wie vorstehend schon angedeutet, kann dem hohen Expansionsdruck des Klebstoffs begegnet werden, indem das Kohlefasergewebe 3 quer zur Erstreckungsrichtung der Klebefuge 2.1 in beispielsweise durch Glasfasergewebestege gegeneinander isolierte Abschnitte unterteilt und Abschnitt für Abschnitt nacheinander mit zeitlicher Verzögerung stromdurchflossen bzw. erwärmt wird; die beiden dargestellten (nach Funktionserfüllung abtrennbaren) Kupferstreifen 4 würde man hierzu der Länge nach in eine entsprechende Anzahl isolierter Abschnitte unterteilen.

## Patentansprüche

1. Verfahren zum Verkleben von Gegenständen mittels eines heißhärtbaren Klebstoffs, der in der Klebefuge durch einen eingebetteten elektrisch leitenden Faserstoff infolge Stromdurchflusses erwärmt wird, dadurch gekennzeichnet, daß der Faserstoff mit einer Faserorientierung entsprechend der Hauptbeanspruchungsrichtung der Klebefuge angeordnet und ein unter Einwirkung von Wärme aufschäumender bzw. sich ausdehnender Spleißkleber verwendet wird.

2. Verfahren nach Anspruch 1, dadurch gekennzeichnet, daß der Faserstoff in der Klebefuge in gegeneinander isolierte Abschnitte unterteilt und daß von Abschnitt zu Abschnitt mit zeitlicher Verzögerung die Wärme erzeugt wird.

## Claims

1. A method of bonding objects by means of a heathardenable adhesive which is heated in the adhesion joint by passage of current through an electricallyconductive fibrous material embedded therein, characterised in that the fibrous material is arranged with a fibre orientation in accordance with the main stress direction of the adhesion joint and use is made of a splicing adhesive which effervesces or expands under the action of heat.

2. A method according to chlaim 1, characterised in that the fibrous material in the adhesion joint is subdivided into mutually-isolated sections and in that the heat is generated with a time delay from section to section.

## Revendications

1. Procédé pour le collage d'objets au moyen d'une colle durcissable à la chaleur qui est chauffée dans le joint à coller par passage de courant dans un matériau fibreux électriquement conducteur noyé dans la masse, caractérisé par le fait que le matériau fibreux est disposé avec orientation des fibres correspondant au sens de la sollicitation principale du joint à coller et qu'on utilise une colle de jonction s'expansant et se dilatant sous l'effet de la chaleur.

2. Procédé selon la revendication 1, caractérisé par le fait que le matériau fibreux dans le joint à coller est divisé sections isolées les unes par rapport aux autres et que la chaleur est produite avec retard dans le temps section par section.